Europäisches Patentamt

European Patent Office

Office européen des brevets

(11) Veröffentlichungsnummer: **0 135 881**
**B1**

(12) **EUROPÄISCHE PATENTSCHRIFT**

(45) Veröffentlichungstag der Patentschrift: **30.05.90**

(21) Anmeldenummer: **84110775.8**

(22) Anmeldetag: **10.09.84**

(51) Int. Cl.⁵: **G 06 F 15/16, G 06 F 13/40**

(54) Speicherprogrammierbares Automatisierungsgerät.

(30) Priorität: **19.09.83 DE 3333807**

(43) Veröffentlichungstag der Anmeldung:
**03.04.85 Patentblatt 85/14**

(45) Bekanntmachung des Hinweises auf die
Patenterteilung:
**30.05.90 Patentblatt 90/22**

(84) Benannte Vertragsstaaten:
**CH DE FR GB LI SE**

(56) Entgegenhaltungen:
**EP-A-0 033 445**
**US-A-4 320 452**

**ELECTRICAL DESIGN NEWS, Band 28, Nr. 15,
Juli 1983, Seiten 136-149, Boston, US; B.
NICHOLSON: "Backplane buses on
Eurocard/DIN boost system power, flexibility"
IEEE TRANSACTIONS ON INDUSTRIAL
ELECTRONICS, Band IE-30, Nr. 2, Mai 1983,
Seiten 155-159, IEEE, New York, US; W.M.
FLOYD: "System to evaluate communication
protocols for automotive multiplex"**

(73) Patentinhaber: **Siemens Aktiengesellschaft
Wittelsbacherplatz 2
D-8000 München 2 (DE)**

(72) Erfinder: **Illauer, Helmut, Dipl.-Ing (FH)
Burgsalacherstrasse 23
D-8500 Nürnberg (DE)**

(56) Entgegenhaltungen:

**IBM TECHNICAL DISCLOSURE BULLETIN, Band
16, Nr. 5, Oktober 1973, Seiten 1586-1588, New
York, US; W.G. SWENSON: "Alternate path
control systems"**

**Beschreibung**

Die Erfindung bezieht sich auf ein speicherprogrammierbares Automatisierungsgerät unter Verwendung von Zentraleinheiten auf Mehrprozessorbasis mit einem internen Bussystem und einer Schnittstelle zu einem externen Bussystem für den Anschluß von Peripheriebaugruppen, wobei die in ein gemeinsames Gehäuse einsteckbaren Zentraleinheiten neben ihrer Schnittstelle zu ihrem externen Bussystem eine weitere Schnittstelle zum Anschluß an ein zusätzliches getrenntes Bussystem im Gerät aufweisen. Eine solche Anordnung ist beispielsweise im Rahmen von Europa-Karten mit Rückwandbus bekannt (vgl. z.B. Electrical Design News, Vol 28 (1983), Juli, No. 15, Seiten 136-141). Es handelt sich hier um Computer, die in einen Rahmen eingesetzt sind und neben ihren Anschlüssen zu einem Peripheribus noch einen gemeinsamen Systembus haben.

Bei vielen Teilnehmern an einem solchen Bus muß dafür gesorgt werden, daß die Spannungspegel auf den einzelnen Daten, Adre- ßund sonstigen Leitungen hoch genug bleiben. Hierzu sind zusätzliche Stromversorgungen für den Bus bekannt (vgl. z.B. US-PS 43 20 452).

Speicherprogrammierbare Steuerungen mit zyklisch durchlaufendem Anwenderprogramm sind beispielsweise in der Zeitschrift "Siemens-Energietechnik" 1979, Heft 2, Seiten 43 bis 47; Heft 4, Seiten 136 bis 139 oder in der Zeitschrift "Siemens-Energietechnik" 1980, Heft 9, Seiten 360 bis 363 oder in der europäischen Patentschrift 10170 und in den US-Patentschriften 3 921 146 oder 3 942 158 näher beschrieben.

Eine derartige Steuerung besteht in ihrem Kern, der Zentraleinheit, beispielsweise aus einem Wortprozessor zur Bearbeitung von Betriebssystembefehlen und Wortbefehlen, einem Bitprozessor zur Bearbeitung binärer Verknüpfungsbefehle und ferner aus Betriebssystemspeicher, Anwenderprogrammspeicher und Datenspeicher. Diese Zentraleinheit verkehrt dann über einen Peripheriebus mit den einzelnen Peripheriebaugruppen zur Eingabe und Ausgabe von Befehlen und Signalen von und zum Prozeß.

Der vorliegenden Erfindung liegt die Aufgabe zugrunde, ein Automatisierungsgerät der eingangs genannten Art zu schaffen, bei dem sich Anforderungen an Redundanz und Sicherheit leicht erfüllen lassen.

Diese Aufgabe wird erfindungsgemäß dadurch gelöst, daß das zusätzliche Bussystem zur gemeinsamen Stromversorgung und zum von einem Koordinierungsprozessor gesteuerten Datenverkehr der Zentraleinheit untereinander dient.

Dieses Bussystem kann, da es völlig von der Peripherie entkoppelt ist, optimal den Anforderungen von Kommunikation und Stromversorgung angepaßt werden.

So können z.B. zwei Stromversorgungen gekoppelt werden für Reservebetrieb; ferner ist auch die Buskopplung mehrerer Systeme sehr einfach realisierbar, da immer der Kommunikationsspeicher in der Zentraleinheit für den Datenaustausch zur Verfügung steht und über spezielle Interruptleitungen gezielt jede Zentraleinheit angesprochen werden kann.

Vorteilhafterweise verfügt der zusätzliche Kommunikationsbus auch über Schnittstellen zur Verbindung mit übergeordneten Rechnern oder mit Terminals.

Anhand eines in der Zeichnung dargestellten Ausführungsbeispiels sei die Erfindung näher erläutert; es zeigen:

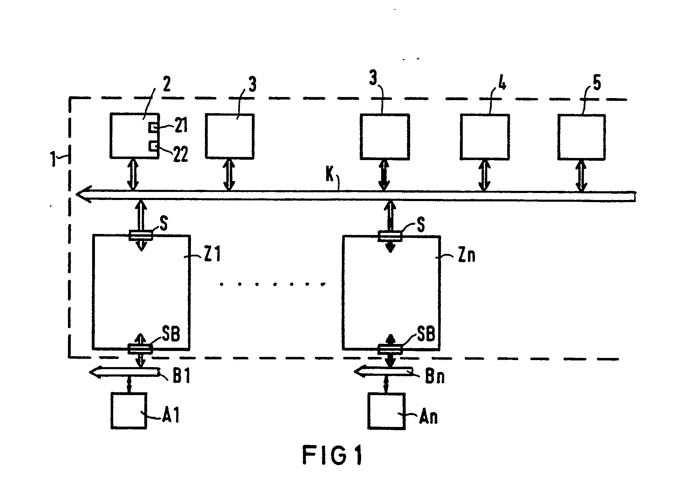

Figur 1 die Struktur des Automatisierungsgerätes,

Figur 2 den Aufbau einer Zentraleinheit,

Figur 3 die Verwendung des Automatisierungsgerätes als sicherheitsgerichtetes System, und

Figur 4 das Automatisierungsgerät in der Verwendung als redundantes System.

Das Automatisierungsgerät besteht aus einem gestrichelt angedeuteten gemeinsamen Grundgehäuse 1, in dem Steckplätze für n-Zentraleinheiten Z1 bis Zn vorgesehen sind. Jede Zentraleinheit verfügt an der Rückseite über eine Steckverbindung S zu einem Kommunikationsbus K und an der Vorderseite u.a. über eine Steckverbindung SB zu ihrem betreffenden Peripheriebus Bl bis Bn. An diesen peripheren Bussen sind die einzelnen Ein/Ausgabausteine, intelligente Peripheriebaugruppen, usw. Al bis An angeschlossen. Da jede Zentraleinheit über ihren eigenen peripheren Bus verfügt, können die Zentraleinheiten über das komplette periphere Adraßvolumen verfügen und unabhängig voneinander arbeiten.

An dem Kommunikationsbus K ist ferner ein Koordinierungsprozessor 2 angeschlossen, der Taktgeber 21 und Vergleicher 22 umfaßt. Dieser Koordinierungsprozessor 2 regelt die Kommunikation der einzelnen Zentraleinheiten Z1 bis Zn untereinander. Ferner sind an diesem Kommunikationsbus K noch Kommunikstionsbaugruppen 3 zu Fremdsystemen und eine Anschaltung 4 zu einem Bus eines übergeordneten Leitrechnersystems angeschlossen. Ferner ist im Rahmen des Kommunikationsbusses K auch noch eine Leitungsführung für die Stromversorgung der einzelnen Zentraleinheiten vorgesehen. Zur Speisung dieses Leitungssystems ist eine Stromversorgung 5 an den Bus K angeschaltet.

Der Kommunikationsbus K kann daher z.B. aus Leitungen für die Spannungsversorgung von 5 Volt, aus Leitungen zum Takten der Zentraleinheiten, aus Interruptleitungen und aus Datenleitungen und Adreßleitungen bestehen.

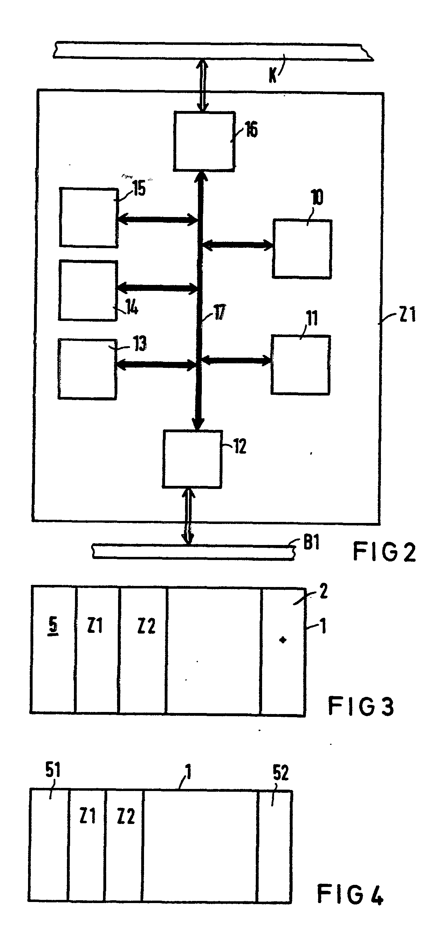

Wie aus Figur 2 ersichtlich, besteht jede der Zentraleinheiten, z.B. Z1, aus einem arithmetischen Prozessor 14 (Wortprozessor), einem Bitprozessor 13, einem Datenspeicher 15 und einem als Modul ansteckbaren Anwenderprogrammspeicher 11, die über ein Bussystem 17 miteinander kommunizieren. Die Koordinierung aller Vorgänge wird von einem Zentralprozessor 10 vorgenommen. Zum Verkehr mit der Umwelt verfügt die Zentraleinheit noch über einen Ein/Ausgabeprozessor 12, der den Verkehr mit dem Peripheriebus B1 übernimmt, und einen Kommunikationsprozessor 16, der den Datenaustausch vom und zum Kommunikationbus K regelt. Jeder der Prozessoren 12 und 16 verfügt dabei über einen Speicher zum Puffern von eingehenden oder ausgehenden Daten oder Befehlen.

Figur 3 zeigt ein sicherheitsgerichtetes System. Hier haben beide Zentraleinheiten Z1 und )2 dasselbe Anwenderprogramm in ihrem Anwenderprogrammspeicher und arbeiten, getaktet von dem gemeinsamen Taktgeber 21 im Koordinierungsprozessor 2, synchron jede Anweisung ab. Jede Zentraleinheit hat ihre eigene Peripherie, wobei die Ausgänge der beiden Zentraleinheiten in Reihe geschaltet und die Eingänge parallel geschaltet sind.

Die Operationsergebnisse beider Zentraleinheiten werden laufend über den Kommunikationsbus K dem Vergleicher 22 im Koordinierungsprozessor 2 mitgeteilt und miteinander hier verglichen. Stellt sich eine Ungleichheit der Ergebnisse heraus, werden beide Zentraleinheiten Z1, Z2 sofort durch den Koordinierungsprozessor 2 gestoppt.

Bei dem in Figur 4 gezeigten redundanten System sind beide Zentraleinheiten mit der gleichen Peripherie verbunden, aber nur z.B. die Zentraleinheit Z1 gibt die Steuerbefehle an die Peripherie aus. Über den Kommunikationsbus K übermittelt die Zentraleinheit Z1 den jeweils aktuellen Stand des Programmes an die Zentraleinheit Z2. Falls die Zentraleinheit Z1 nun ausfallen sollte, kann sofort die Zentraleinheit Z2 die weitere Bearbeitung der Peripherie übernehmen.

Die Redundanz läßt sich auch hinsichtlich der Stromversorgung erreichen, und zwar in der Weise, daß zwei Stromversorgungen 51 und 52 vorgesehen sind. Solange die Stromversorgung 51 richtig arbeitet, ist durch ihre Ausgangsspannung über den Kommunikationsbus K die Stromversorgung 52 gesperrt. Beim Ausfall der Stromversorgung 51 wird diese Sperre automatisch aufgehoben und die Stromversorgung 52 übernimmt über den Kommunikationsbus K die Stromversorgung des Automatisierungsgerätes.

Ein derartiges redundantes System läßt sich ohne jeglichen Mehraufwand realisieren.

## Patentansprüche

1. Speicherprogrammierbares Automatisierungsgerät unter Verwendung von Zentraleinheiten auf Mehrprozessorbasis mit einem internen Bussystem und einer Schnittstelle zu einem externen Bussystem für den Anschluß von Peripheriebaugruppen, wobei die in ein gemeinsames Gehäuse einsteckbaren Zentraleinheiten neben ihrer Schnittstelle zu ihrem externen Bussystem eine weitere Schnittstelle zum Anschluß an ein zusätzliches getrenntes Bussystem im Gerät aufweisen, dadurch gekennzeichnet, daß dieses zusätzliche Bussystem (K) zur gemeinsamen Stromversorgung und zum von einem Koordinierungsprozessor (2) gesteuerten Datenverkehr der Zentraleinheiten (Z1-Zn) untereinander dient.

2. Speicherprogrammierbares Automatisierungsgerät nach Anspruch 1, dadurch gekennzeichnet, daß das zusätzliche Bussystem (K) über Schnittstellen (3, 4) zur Verbindung mit Rechnern oder Terminals verfügt.

3. Speicherprogrammierbares Automatisierungsgerät nach Anspruch 1, dadurch gekennzeichnet, daß jede Zentraleinheit aus einem Zentralprozessor (10) und unterlagerten Einzelprozessoren (13, 14, 12, 16) für arithmetische Aufgaben und Schnittstellenverkehr besteht.

4. Speicherprogrammierbares Automatisierungsgerät nach Anspruch 1, dadurch gekennzeichnet, daß an jeder Zentraleinheit (Z1-Zn) ein Stecker zum Anschluß an das interne Bussystem und Frontstecker zum Anschluß von Anwenderprogrammspeicher, Programmiergerät und Peripheriebussystem vorhanden sind.

5. Speicherprogrammierbares Automatisierungsgerät nach Anspruch 1, dadurch gekennzeichnet, daß an das zusätzliches Bussystem (K) mindestens zwei Stromversorgungen (51, 52) angeschlossen sind.

6. Speicherprogrammierbares Automatisierungsgerät nach Anspruch 1, dadurch gekennzeichnet, daß mindestens jeweils zwei Zentraleinheiten (Z1, Z2) im Rahmen von redundanten und/oder sicherheitsgerichteten Systemen zusammenarbeiten.

## Revendications

1. Appareil d'automatisation programmable à mémoire, utilisant des unités centrales basées sur des microprocesseurs et comportant un système de bus interne et une interface de liaison à un système de bus externe pour le raccordement de modules périphériques, les unités centrales pouvant être enfichées dans un boîtier commun comportant, en plus de leur interface de liaison à leur système de bus externe, une autre interface pour le raccordement à un système de bus séparé supplémentaire présent dans l'appareil, caractérisé par le fait que ce système de bus supplémentaire (K) sert à assurer l'alimentation commune en courant et à réaliser le trafic des données, commandé par un microprocesseur de coordination (2), des unités centrales (Z1-Zn) entre elles.

2. Appareil d'automatisation programmable à mémoire suivant la revendication 1, caractérisé par le fait que le système de bus supplémentaire (K) dispose d'interfaces (3, 4) de liaison à des ordinateurs ou à des terminaux.

3. Appareil d'automatisation programmable à mémoire suivant la revendication 1, caractérisé par le fait que chaque unité centrale est constituée par un processeur central (10) et par des processeurs individuels subordonnés (13, 14, 12, 16) servant à exécuter des tâches arithmétiques et le trafic par l'intermédiaire des interfaces.

4. Appareil d'automatisation programmable à mémoire suivant la revendication 1, caractérisé par le fait que dans chaque unité centrale (Z1-Zn) il est prévu un connecteur pour le raccordement au système de bus interne et un connecteur frontal pour le raccordement de mémoires de programmes d'utilisateurs, d'un appareil de programmation et de systèmes de bus périphériques.

5. Appareil d'automatisation programmable à mémoire suivant la revendication 1, caractérisé par le fait qu'au moins deux alimentations en courant (51, 52) sont raccordées au système de bus supplémentaire (K).

6. Appareil d'automatisation programmable à mémoire suivant la revendication 1, caractérisé par le fait qu'au moins respectivement deux unités centrales (Z1, Z2) coopèrent dans le cadre de systèmes redondants et/ou axés sur la sécurité.

**Claims**

1. Memory-programmable automation device with use of multiprocessor-based central units having an internal bus system and an interface to an external bus system for the connection of peripheral modules, in which the central units, which can be plugged into a common housing, have, in addition to their interface to their external bus system, a further interface for the purpose of connection to an additional separate bus system in the device, characterised in that this additional bus system (K) serves the purpose of the common power supply and of the data communication, controlled by a coordination processor (2), of the central units (Z1-Zn) one with the other.

2. Memory-programmable automation device according to claim 1, characterised in that the additional bus system (K) has at its disposal interfaces (3, 4) for the purpose of connection to computers or terminals.

3. Memory-programmable automation device according to claim 1, characterised in that each central unit consists of a central processor (10) and subordinate individual processors (13, 14, 12, 16) for arithmetic functions and interface communication.

4. Memory-programmable automation device according to claim 1, characterised in that at each central unit (Z1-Zn) there is a plug connector for the connection to the internal bus system and front plug connector for the connection of user program memory, programming device and peripheral bus system.

5. Memory-programmable automation device according to claim 1, characterised in that there are connected to the additional bus system (K) at least two power supplies (51, 52).

6. Memory-programmable automation device according to claim 1, characterised in that at least, in each case, two central units (Z1, Z2) co-operate within the scope of redundant and/or safety-orientated systems.

FIG 1

FIG 2

FIG 3

FIG 4